# EUROPEAN PATENT SPECIFICATION

(11) **EP 3 044 124 B1**
(45) Date of publication and mention of the grant of the patent: **02.08.2017**
(21) Application number: 14786323.7
(22) Date of filing: 11.09.2014
(51) Int. Cl.: B65D 85/804

(54) **CAPSULE FOR INFUSION PRODUCTS**
KAPSEL FÜR INFUSIONSPRODUKTE
CAPSULE POUR PRODUITS D'INFUSION

(30) Priority: 11.09.2013 IT BO20130481
(43) Date of publication of application: 20.07.2016
(73) Proprietor: Macchiavelli S.r.l., San Lazzaro di Savena (BO) (IT)
(72) Inventor: RONDELLI, Raffaele, I-40050 Argelato (IT)
(74) Representative: Boggio, Luigi
(86) International application number: PCT/IB2014/064436
(87) International publication number: WO 2015/036955

(56) References cited:
- EP-A1- 1 992 575
- EP-A2- 1 961 676
- WO-A1-2004/083071
- WO-A1-2012/072509
- WO-A1-2013/038382
- US-A1- 2012 328 739
- US-A1- 2013 125 762

## Description

### TECHNICAL FIELD

The present invention relates to a capsule for infusion of granular, powder or leaf products such as coffee, barley, milk powder, tea, camomile etc..

### BACKGROUND ART

Generally, the capsules for infusion products comprise a cup made of plastic material wherein the infusion product is housed, and a lid arranged for closing the cup; the lid being made of plastic material or defined by a film. When the capsule is inserted within a percolation chamber of a machine for the extraction of beverages, hot water is pressure injected and passes through at least one hole performed on the lid to mix with the infusion product inside the cup. The beverage then flows out from the cup through at least one hole performed on the bottom wall of the cup. In the percolation chamber the upper edge of the lateral wall of the cup comes in contact with an upper body of the percolation chamber. The cup then has at least one projection (normally annular) which extends from the base wall of the cup itself, and which abuts on a lower body of the percolation chamber.

The capsules described above present a plurality of drawbacks.

In particular, during the percolation step, the cup is pressed between the upper and lower bodies that define the percolation chamber. Despite said pressing a perfect hydraulic seal of the percolation chamber cannot be achieved in an optimal way, and, therefore, a part of the injected water flows out from the percolation chamber precisely through the gap defined between the two percolation chamber bodies. This incorrect hydraulic sealing occurs because the upper edge of the cup and the projection that extends from the base wall of the cup are not in line with one another, and therefore the cup is subject to deformations which result in an imperfect abutment contact between the upper edge of the cup and the upper body of the percolation chamber and an imperfect contact between the projection that extends from the base wall of the cup and the lower body of the percolation chamber. The above deformations occur because the contact points of the cup with the percolation chamber bodies, in addition of not being in line with one another, are defined one at the side face and the other on a projection which originates from the base wall of the cup and therefore during the compression of the cup also the base wall is subject to deformation which also influences the deformation to which the cup side is subject. It is important to remind that the hydraulic seal is one of the main factors in determining the purchase of one capsule with respect to another, and, in fact, it is well known that even a small water leak from the percolation chamber leads to a dramatic drop in sales of the capsules having this defect. Some manufacturing companies in order to improve the hydraulic seal provide the use of different layers of materials glued on the cup contact edges with the percolation chamber bodies; obviously, in such a case there is a large increase of the overall costs.

### DISCLOSURE OF INVENTION

The main aim of the present invention is to provide an infusion capsule of granular, powder or leaf products, which is free from the aforementioned drawbacks and which has a particular conformation allowing a proper and effective hydraulic seal in the percolation chamber during the percolation step.

According to the present invention a capsule for infusion products is provided as disclosed in claim 1. WO 2013/038382 A1, EP 1961676 A2 and EP 1992575 A1 illustrate the preamble of claim 1.

### BRIEF DESCRIPTION OF THE DRAWINGS

For a better understanding of the invention a purely illustrative and not limitative embodiment is described below with the aid of the figures of the accompanying drawings, wherein:
Figure 1 is a side view of a capsule according to the teachings of the present invention;
Figure 2 is a plan view of the capsule of figure 1;
Figure 3 is a view from the bottom to the top of the capsule of figure 1;
Figure 4 is a sectional view of the capsule of figure 1 inserted in a percolation chamber illustrated in section; and Figure 5 is an enlargement of a part of Figure 2.

### BEST MODE FOR CARRYING OUT THE INVENTION

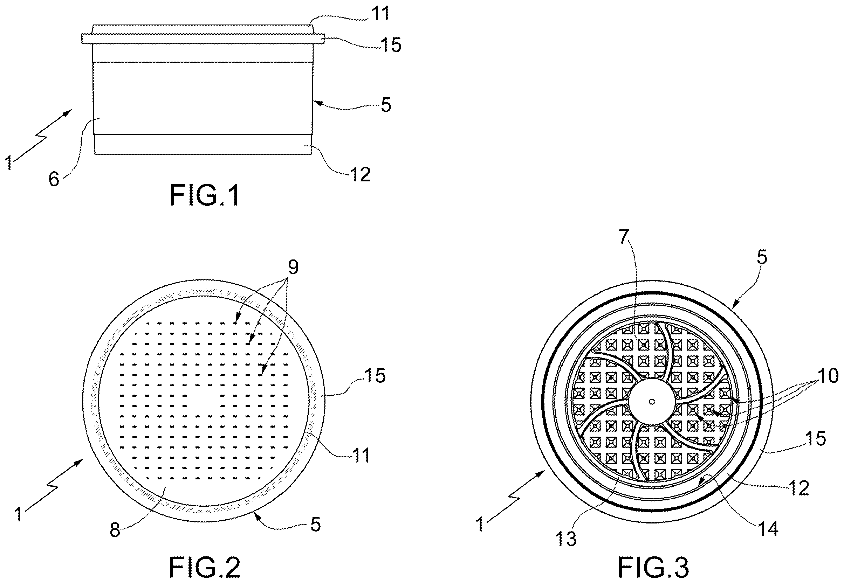

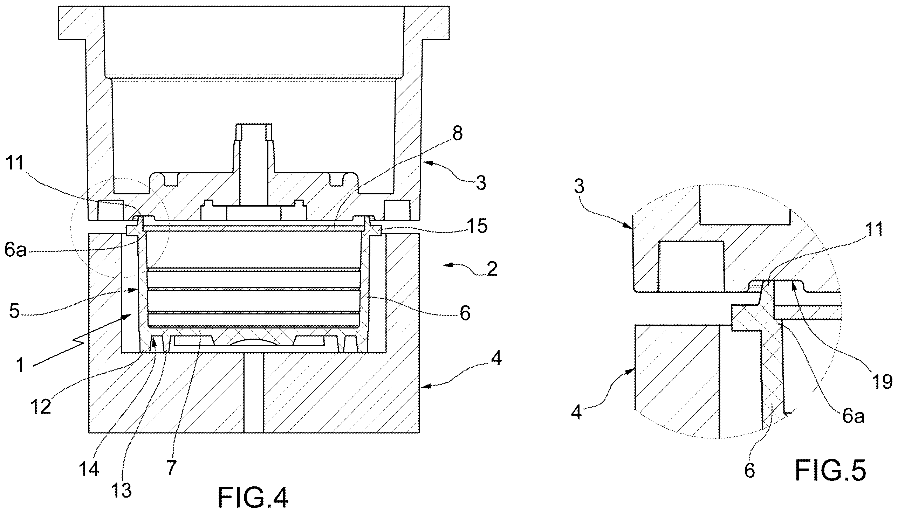

With reference to Figures 1 and 4 reference number 1 indicates as a whole a preferred embodiment of the capsule for infusion products according to the present invention; the capsule 1 being able to contain an infusion product. The capsule 1 is able to be inserted in a percolation chamber 2 defined by an upper body 3 and by a lower body 4; the bodies 3 and 4 are partially illustrated. The capsule 1 comprises a cup-shaped body 5 preferably made in one piece of a plastic material, of a slightly truncated cone shape and defined by a lateral wall 6 and by a bottom wall 7. The capsule 1 also comprises a lid 8 made of plastic material and fixed by interlocking or by welding at the upper part of the cup-shaped body 5. As shown the illustrated example the lid 8 is resting on an annular shoulder 6a formed on the inner face of the lateral wall 6. In the example shown (figures 2 and 3) both the lid 8 and the bottom wall 7 have respective holes 9 and 10 through which hot water enters the cup-shaped body 5 and the beverage exits therefrom. Obviously, the lid 8 and the bottom wall 7 may have in place of the holes 9 and 10 valves suitable to open respective holes or the lid 8 due to water pressure, and the bottom wall 7 may be subject to puncturing by way of appropriate means provided in the percolation chamber for performing said holes.

The lateral wall 6 has an upper annular edge 11 which extends, uninterruptedly with a central section of said lateral wall 6 itself, beyond the placed position of the lid 8 and, in use, is in close contact with the lower face of the upper body 3 of the percolation chamber 2. In figure 5 a percolation chamber 2 is illustrated wherein the upper body 3 has an annular recess 19 engaged by the edge 11. Moreover, the lateral wall 6 has a lower annular edge 12 which extends, uninterruptedly with said section of the lateral wall 6 itself, beyond the level of the bottom wall 7 and, in use, is in close contact with the upper face of the lower body 4 of the percolation chamber 2. In essence the edges 11 and 12 are formed on the lateral wall 6 and are substantially aligned with one another.

An annular projection 13 also extends downwards from the bottom wall 7 and defines, together with the edge 12 an annular recess 14 which could be the seat of a possible projection (not shown) that extends from the upper face of the lower body 4 of the percolation chamber 2. Finally an annular projection 15 originates from the outer face of the lateral wall 6, at a level lower than that of the edge 11, and is used as a holding element during the manufacturing of the capsule 1 both for feeding the cup-shaped body 5 towards the dosing station of the infusion product and during the dosing step of said infusion product.

From experimental tests, by making the contact edges with the bodies 3 and 4 of the percolation chamber directly on the lateral wall 6 of the cup-shaped body 5 a perfect and effective hydraulic seal is obtained. In essence unlike the capsules currently on the market wherein the pressure edges were obtained on different walls of the cup body and that therefore said parts were subjected to bending (with consequent negative deformation for the hydraulic seal) since the pressure edges were not aligned with one another, in the capsule 1 object of the present invention the pressure edges are aligned with one another, being formed on a same wall, said wall acts as a "beam" subject to compression at the longitudinal ends, and therefore defines an effective and close contact between the edges 11 and 12 and the bodies 3 and 4 of the percolation chamber 2.

Preferably, the cup-shaped body 5 and/or the lid 8 are made of PET and/or PP which as known are plastic materials of the polyolefin family. Moreover, the entire capsule 1 is preferably made of biodegradable plastic material which as known is defined by plastic material suitably additivated with substances already known or alternatively using biopolymers that make the capsules 1 biodegradable.

Worth highlighting is that the lid 8 may provide along its peripheral edge an L annular projection that could lean on the end edge 11.

From the above description, clear advantages are achieved with the embodiment of the present invention.

In particular, a cup-shaped body is obtained wherein the contact edges of the percolation chamber bodies are aligned with one another as formed at the longitudinal ends of the lateral wall. This conformation of the cup-shaped body enables an effective and accurate hydraulic seal. Furthermore, the conformation of the cup-shaped body described above facilitates the construction of the production mold of the cup-shaped body itself with consequent economic advantages. Finally, this particular shape of the cup-shaped body, allows the optimal maintenance of hydraulic seal even under wear conditions of the dispensing machine percolation chamber, while maintaining the safety and dispensing performance of product capsules.

## Claims

1. A capsule (1) for infusion products comprising:
- a cup-shaped body (5), which is made of a plastic material and is defined by a bottom wall (7) and by a lateral wall (6);
- a lid (8), which is arranged so as to close the cup-shaped body (5);
- said lateral wall (6) having a lower annular edge (12), which extends, uninterruptedly with said section of said lateral wall (6) itself, beyond the level of said bottom wall (7) and, in use, is in close contact with the upper face of a lower body (4) of a percolation chamber (2);
**characterised in that** said lateral wall (6) has an upper annular edge (11), which extends, uninterruptedly with a central section of said lateral wall (6) itself, beyond the position taken on by said lid (8) and, in use, is in close contact with the lower face of an upper body (3) of said percolation chamber (2) ; and
**in that** said edges (11 and 12), which are obtained on said lateral wall (6), are in line with one another.

2. A capsule (1) for infusion products, according to Claim 1, **characterised in that** a first annular projection (13) extends downwards from said bottom wall (7) and defines, together with said lower edge (12) of said lateral wall (6), an annular recess (14).

3. A capsule (1) for infusion products, according to at least one of the previous Claims, **characterised in that** a second annular projection (15) originates from the outer face of said lateral wall (6), at a level that is lower than the one of said upper edge (11), and is used as a holding element during the manufacturing of said capsule (1).

## Patentansprüche

1. Kapsel (1) für Aufgussprodukte, umfassend:
- ein becherförmiges Gehäuse (5), welches aus einem Kunststoffmaterial hergestellt ist und durch eine Bodenwand (7) und eine Seitenwand (6) begrenzt ist;
- einen Deckel (8), welcher so angeordnet ist, dass er das becherförmige Gehäuse (5) verschließt;
- wobei die Seitenwand (6) eine untere ringförmige Kante (12) hat, welche durchgehend mit dem Abschnitt der Seitenwand (6) selbst über die Ebene der unteren Wand (7) hinaus verläuft und beim Gebrauch mit der Oberseite eines unteren Gehäuses (4) einer Filterkammer (2) in engem Kontakt steht;
**dadurch gekennzeichnet, dass** die Seitenwand (6) eine obere ringförmige Kante 11) hat, welche durchgehend mit einem zentralen Abschnitt der Seitenwand (6) selbst über die von dem Deckel (8) eingenommene Stellung hinaus verläuft und beim Gebrauch mit der Unterseite eines oberen Gehäuses (3) der Filterkammer (2) in engem Kontakt steht; und
dadurch dass die Kanten (11 und 12), welche an der Seitenwand (6) ausgebildet sind, miteinander ausgerichtet sind.

2. Kapsel (1) für Aufgussprodukte nach Anspruch 1, **dadurch gekennzeichnet, dass** ein erster ringförmiger Vorsprung (13) von der Bodenwand (7) nach unten verläuft und zusammen mit der unteren Kante (12) der Seitenwand (6) eine ringförmige Vertiefung (14) definiert.

3. Kapsel (1) für Aufgussprodukte nach mindestens einem der vorhergehenden Ansprüche, **dadurch gekennzeichnet, dass** ein zweiter ringförmiger Vorsprung (15) auf einer Ebene, welche tiefer als die der oberen Kante (11) ist, von der Außenseite der Seitenwand (6) ausgeht und während der Herstellung der Kapsel (1) als ein Halteelement verwendet wird.

## Revendications

1. Capsule (1) pour produits d'infusion comportant:
- un corps cupuliforme (5), qui est constitué d'une matière plastique et est défini par une paroi de fond (7) et par une paroi latérale (6);
- un opercule (8) qui est agencé de manière à fermer le corps cupuliforme (5);
- ladite paroi latérale (6) présentant un bord annulaire inférieur (12), qui s'étend de manière ininterrompue avec la section de ladite paroi latérale (6) elle-même, au-delà du plan de la paroi de fond (7) et, en cours d'utilisation, est en contact étroit avec la face supérieure d'un corps inférieur (4) d'une chambre de percolation (2),
**caractérisé en ce que** la paroi latérale (6) présente un bord annulaire supérieur (11) s'étendant de manière ininterrompue avec la section centrale de la paroi latérale (6) elle-même, au-delà de la position prise par l'opercule (8) et qui, à l'utilisation, est en contact étroit avec la face inférieure d'un corps supérieur (3) de la chambre de percolation (2), et **en ce que** lesdits bords (11, 12), qui sont obtenus avec ladite paroi latérale (6), sont alignés l'un avec l'autre.

2. Capsule (1) pour produits d'infusion, selon la revendication 1, **caractérisée en ce qu'**une première saillie annulaire (13) s'étend vers le bas depuis ladite paroi de fond (7) et définit, conjointement avec ledit bord inférieur (12) de ladite paroi latérale (6), un évidement annulaire (14).

3. Capsule (1) pour produits d'infusion, selon au moins l'une des revendications précédentes, **caractérisée en ce qu'**une seconde saillie annulaire (15) provient de la face externe de ladite paroi latérale (6), à un niveau inférieur d'un niveau dudit bord supérieur (11), et est utilisé comme élément de maintien pendant la fabrication de ladite capsule (1).
